(19) Europäisches Patentamt / European Patent Office / Office européen des brevets

(11) **EP 4 060 662 B1**

(12) **EUROPEAN PATENT SPECIFICATION**

(45) Date of publication and mention
of the grant of the patent:
**03.12.2025 Bulletin 2025/49**

(21) Application number: **19955555.8**

(22) Date of filing: **13.12.2019**

(51) International Patent Classification (IPC):
**G10L 25/78** *(2013.01)*        **G10L 25/84** *(2013.01)*

(52) Cooperative Patent Classification (CPC):
**G10L 25/78;** G10L 25/84; G10L 2025/786

(86) International application number:
**PCT/JP2019/048921**

(87) International publication number:
**WO 2021/117219 (17.06.2021 Gazette 2021/24)**

(54) **INFORMATION PROCESSING DEVICE, DETECTION METHOD, AND DETECTION PROGRAM**

INFORMATIONSVERARBEITUNGSVORRICHTUNG, DETEKTIONSVERFAHREN UND
DETEKTIONSPROGRAMM

DISPOSITIF DE TRAITEMENT D'INFORMATIONS, PROCÉDÉ DE DÉTECTION ET PROGRAMME
DE DÉTECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.09.2022 Bulletin 2022/38**

(73) Proprietor: **MITSUBISHI ELECTRIC
CORPORATION
Chiyoda-ku
Tokyo 100-8310 (JP)**

(72) Inventor: **HANAZAWA, Toshiyuki
Tokyo 100-8310 (JP)**

(74) Representative: **Pfenning, Meinig & Partner mbB
Patent- und Rechtsanwälte
Theresienhöhe 11a
80339 München (DE)**

(56) References cited:
**WO-A1-2009/078093        JP-A- S62 265 699
JP-B2- 3 812 887        US-A1- 2013 003 987
US-B1- 6 175 634**

## Description

## TECHNICAL FIELD

The present disclosure relates to an information processing device.

## BACKGROUND ART

There has been known the technology of speech recognition. For example, there has been proposed a technology of performing speech recognition on speech sections in an audio signal (see Patent Reference 1).

## PRIOR ART REFERENCE

## PATENT REFERENCE

Patent Reference 1: Japanese Patent Application Publication No. 10-288994

## SUMMARY OF THE INVENTION

## PROBLEM TO BE SOLVED BY THE INVENTION

Incidentally, there is a case where it is desirable to detect a detection target in a sound signal. For example, it is possible to employ a method of detecting the detection target by using a threshold value based on the power of noise. Here, there is a case where the power of noise can rise abruptly. When the power of noise exceeds the threshold value, the method is incapable of detecting the detection target with high accuracy.

Document US 6 175 634 B1 discloses a technique for suppressing noise in an audio signal. An audio signal is received from an audio input device. A noise level for the audio signal is determined and continuously updated as the audio signal is received. The audio signal is then attenuated according to the relationship between its current energy level and the current noise level. If the audio signal falls below the current noise level, then a constant, maximum attenuation factor is applied to the signal. If the energy of the signal exceeds the noise level but does not exceed a predetermined maximum energy level that is higher than the noise level, then the audio signal is attenuated based on an exponential attenuation function. If the audio signal exceeds the predetermined maximum energy level, then no attenuation is applied. An attack and decay smoothing function dampens the response time of the attenuated output.

Document US 2013/003987 A1 discloses a band separating unit which carries out a band division of a plurality of power spectra into which an input signal is converted by a time-to-frequency converting unit to combine power spectra into each subband, and a band representative component generating unit defines a power spectrum having a maximum among the plurality of power spectra within each subband as a representative power spectrum. A noise suppression amount generating unit calculates an amount of noise suppression for each subband by using the representative power spectrum and a noise spectrum, and a noise suppressing unit suppresses the amplitudes of the power spectra according to the amount of noise suppression.

An object of the present disclosure is to detect the detection target with high accuracy.

## MEANS FOR SOLVING THE PROBLEM

The invention is defined by the appended set of claims. Any embodiments, examples, aspects and the like not covered by the scope of the claims are provided for illustrative purposes.

An information processing device according to an aspect of the present disclosure is provided. The information processing device includes an acquisition unit that acquires a sound signal and a control unit that segments the sound signal into a plurality of sections, calculates a variation value as a variation amount per section time in regard to each of the plurality of sections based on the sound signal, identifies sections where the variation value is less than or equal to a predetermined threshold value among the plurality of sections, calculates power of the sound signal in each of the identified sections based on the sound signal, determines a maximum value among values of the power of the sound signal in each of the identified sections, sets a value based on the maximum value as a detection threshold value, and detects sections where the power of the sound signal with elapse of time is higher than or equal to the detection threshold value as detection target sections.

## EFFECT OF THE INVENTION

According to the present disclosure, the detection target can be detected with high accuracy.

## BRIEF DESCRIPTION OF THE DRAWINGS

Fig. 1 is a diagram showing the configuration of hardware included in an information processing device in a first embodiment.
Fig. 2 is a diagram showing a comparative example.
Fig. 3 is a block diagram showing function of the information processing device in the first embodiment.
Fig. 4 is a flowchart showing an example of a process executed by the information processing device in the first embodiment.
Fig. 5 shows a concrete example of a process executed by the information processing device in the first embodiment.
Fig. 6 is a block diagram showing function of an information processing device in a second embodiment.

Fig. 7 is a flowchart showing an example of a process executed by the information processing device in the second embodiment.

Fig. 8 shows a concrete example of a process executed by the information processing device in the second embodiment.

Fig. 9 is a block diagram showing function of an information processing device in a third embodiment.

Fig. 10 is a flowchart showing an example of a process executed by the information processing device in the third embodiment.

Fig. 11 is a block diagram showing function of an information processing device in a fourth embodiment.

Fig. 12 is a flowchart (No. 1) showing an example of a process executed by the information processing device in the fourth embodiment.

Fig. 13 is a flowchart (No. 2) showing the example of the process executed by the information processing device in the fourth embodiment.

Fig. 14 shows a concrete example (No. 1) of a process executed by the information processing device in the fourth embodiment.

Fig. 15 shows a concrete example (No. 2) of a process executed by the information processing device in the fourth embodiment.

Fig. 16 is a flowchart (No. 1) showing a modification of the fourth embodiment.

Fig. 17 is a flowchart (No. 2) showing the modification of the fourth embodiment.

Fig. 18 is a block diagram showing function of an information processing device in a fifth embodiment.

Fig. 19 is a flowchart (No. 1) showing an example of a process executed by the information processing device in the fifth embodiment.

Fig. 20 is a flowchart (No. 2) showing the example of the process executed by the information processing device in the fifth embodiment.

Fig. 21 shows a concrete example (No. 1) of a process executed by the information processing device in the fifth embodiment.

Fig. 22 shows a concrete example (No. 2) of a process executed by the information processing device in the fifth embodiment.

## MODE FOR CARRYING OUT THE INVENTION

Embodiments will be described below with reference to the drawings. The following embodiments are just examples and a variety of modifications are possible within the scope of the present disclosure.

First Embodiment

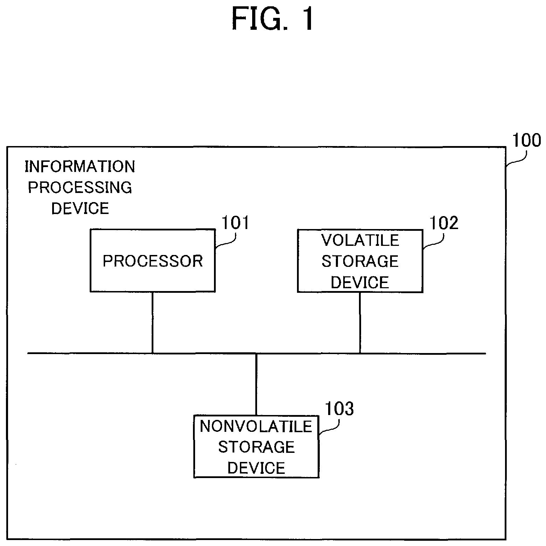

Fig. 1 is a diagram showing the configuration of hardware included in an information processing device in a first embodiment. An information processing device 100 is a device that executes a detection method. The information processing device 100 includes a processor 101, a volatile storage device 102 and a nonvolatile storage device 103.

The processor 101 controls the whole of the information processing device 100. For example, the processor 101 is a Central Processing Unit (CPU), a Field Programmable Gate Array (FPGA) or the like. The processor 101 can also be a multiprocessor. The information processing device 100 may also be implemented by a processing circuitry or implemented by software, firmware or a combination of software and firmware. Incidentally, the processing circuitry may be either a single circuit or a combined circuit.

The volatile storage device 102 is main storage of the information processing device 100. The volatile storage device 102 is a Random Access Memory (RAM), for example. The nonvolatile storage device 103 is auxiliary storage of the information processing device 100. The nonvolatile storage device 103 is a Hard Disk Drive (HDD) or a Solid State Drive (SSD), for example.

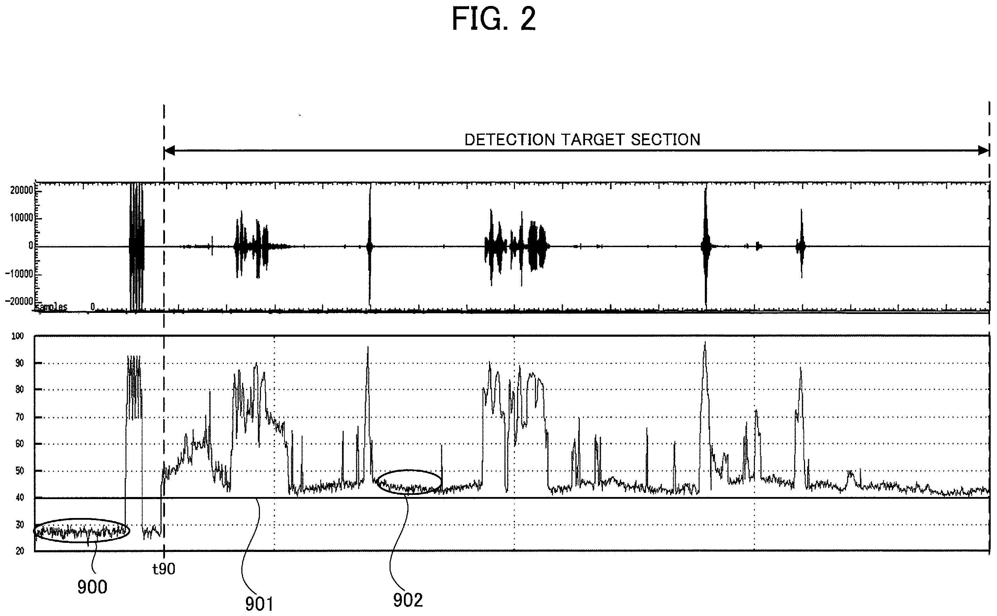

Fig. 2 is a diagram showing a comparative example. The upper stage of Fig. 2 shows a graph of a waveform of sound. A graph showing a sound signal of the sound in the upper stage of Fig. 2 in terms of power is the lower stage of Fig. 2. A range 900 in Fig. 2 indicates noise.

There is a case where it is desirable to detect a detection target in a sound signal. In Fig. 2, the detection target is assumed to be speech. Here, the power of noise is lower than the power of speech in many cases. Thus, it is possible to employ a method of detecting speech by using a threshold value. Fig. 2 indicates a threshold value 901. For example, a section where the power is higher than or equal to the threshold value 901 is detected as a detection target section. Namely, the detection target section is detected as a section of speech.

Here, there is a case where the power of noise can rise abruptly. For example, Fig. 2 indicates that the power of noise rose abruptly after time t90. For example, a range 902 in Fig. 2 indicates the noise. When the power of noise rose abruptly, a section after the time t90 is detected as a detection target section. Fig. 2 indicates that not only speech but also noise is regarded as a detection target since the power of noise exceeds the threshold value.

As above, the method of Fig. 2 is incapable of detecting the detection target with high accuracy. Therefore, a method capable of detecting the detection target with high accuracy will be described below.

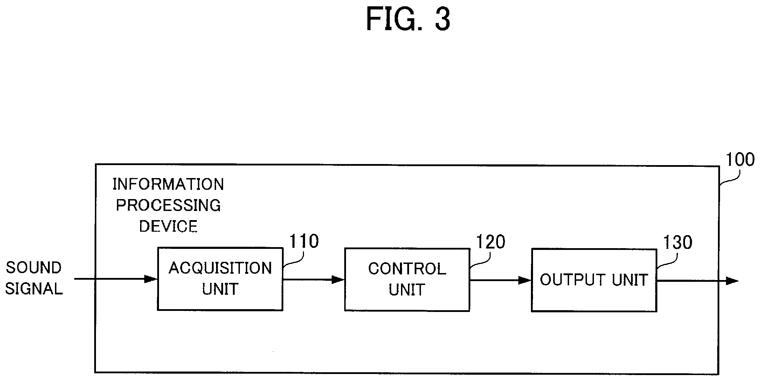

Fig. 3 is a block diagram showing function of the information processing device in the first embodiment. The information processing device 100 includes an acquisition unit 110, a control unit 120 and an output unit 130.

Part or all of the acquisition unit 110, the control unit 120 and the output unit 130 may be implemented by the processor 101. Part or all of the acquisition unit 110, the control unit 120 and the output unit 130 may be implemented as modules of a program executed by the processor 101. For example, the program executed by the processor 101 is referred to also as a detection program. The detection program has been recorded in a record medium, for example.

The acquisition unit 110 acquires a sound signal. For example, the sound of the sound signal is sound in a meeting room where a meeting is held, a telephone conversation, or the like. Further, the sound signal is a signal based on recording data, for example.

The control unit 120 calculates the power of the sound signal with the elapse of time based on the sound signal. In other words, the control unit 120 calculates the power of the sound signal in a time line based on the sound signal. The power of the sound signal will hereinafter be referred to as sound signal power. Incidentally, the sound signal power may also be calculated by a device other than the information processing device 100.

The control unit 120 segments the sound signal into a plurality of sections. The control unit 120 may either evenly segment the sound signal or unevenly segment the sound signal. The control unit 120 calculates a variation value of each of the plurality of sections based on the sound signal. Incidentally, the variation value is a variation amount per section time. The variation value may also be regarded as a variation amount of the power of the sound signal per section time. Further, the section time is a time corresponding to one section.

The control unit 120 identifies sections where the variation value is less than or equal to a predetermined threshold value among the plurality of sections. The control unit 120 calculates the power of the sound signal in each of the identified sections based on the sound signal. Namely, the control unit 120 calculates the sound signal power of each of the identified sections based on the sound signal. The control unit 120 determines a maximum value among the values of the sound signal power in each of the identified sections. The control unit 120 sets a value based on the maximum value as a detection threshold value. In other words, the control unit 120 sets a value greater than or equal to the maximum value as the detection threshold value. For example, the control unit 120 sets the sum of the maximum value and a predetermined value as the detection threshold value. The control unit 120 detects sections where the sound signal power is higher than or equal to the detection threshold value as the detection target sections.

The output unit 130 outputs information indicating the detection target sections. For example, the output unit 130 outputs the information indicating the detection target sections to a display. Alternatively, the output unit 130 outputs the information indicating the detection target sections to an external device connectable to the information processing device 100, for example. Alternatively, the output unit 130 outputs the information indicating the detection target sections to a paper medium via a printing device, for example.

Next, a process executed by the information processing device 100 will be described below by using a flowchart.

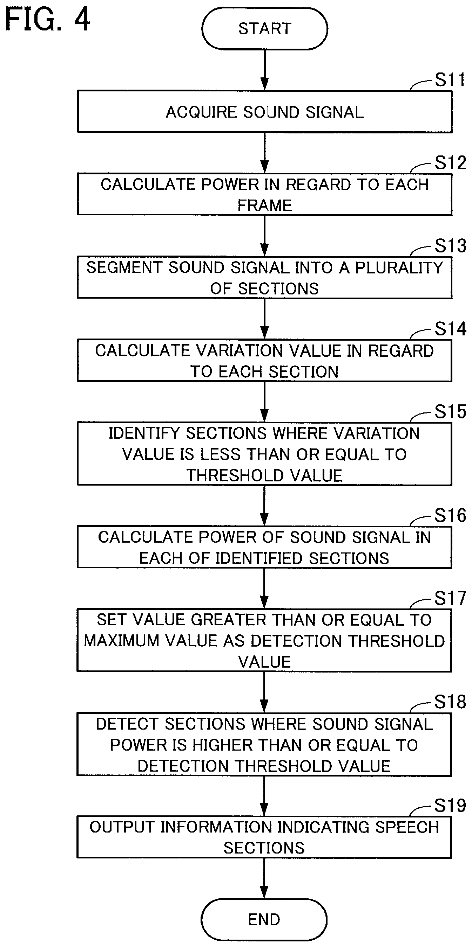

Fig. 4 is a flowchart showing an example of the process executed by the information processing device in the first embodiment.

(Step S11) The acquisition unit 110 acquires a sound signal.

(Step S12) The control unit 120 segments the sound signal in units of frames and calculates the power in regard to each frame. Incidentally, the frame is 10 msec, for example.

Namely, the sound signal power is calculated in the process of the step S12. Accordingly, the sound signal power can be represented as a graph, for example.

(Step S13) The control unit 120 segments the sound signal into a plurality of sections. For example, the control unit 120 may segment the sound signal power represented as a graph into a plurality of sections. Incidentally, a plurality of frames in the step S12 belong to one section.

(Step S14) The control unit 120 calculates the variation value in regard to each section based on the sound signal. Further, the control unit 120 may calculate a variance value in regard to each section based on the sound signal.

The calculation of the variance value will be explained here. First, the power m of the sound signal in each section is calculated according to expression (1). The character P represents the power. The character i represents a frame number. Further, i is a number from 1 to N.

$$m = \frac{1}{N} \sum_{i=1}^{N} P_i \cdots (1)$$

Then, the variance value v is calculated by using the following expression (2):

$$v = \frac{1}{N} \sum_{i=1}^{N} (P_i - m)^2 \cdots (2)$$

(Step S15) The control unit 120 identifies sections where the variation value is less than or equal to a predetermined threshold value. In the case where the variance value is calculated, the control unit 120 identifies sections where the variance value is less than or equal to a predetermined threshold value.

(Step S16) The control unit 120 calculates the power of the sound signal in each of the identified sections by using the expression (1).

(Step S17) The control unit 120 determines power of the maximum value among the values of the power calculated for each of the sections. The control unit 120 sets a value greater than or equal to the maximum value as the detection threshold value.

(Step S18) The control unit 120 detects sections where the sound signal power is higher than or equal to the detection threshold value as speech sections.

(Step S19) The output unit 130 outputs information indicating the speech sections. For example, the output unit 130 outputs a start time and an end time of each speech section.

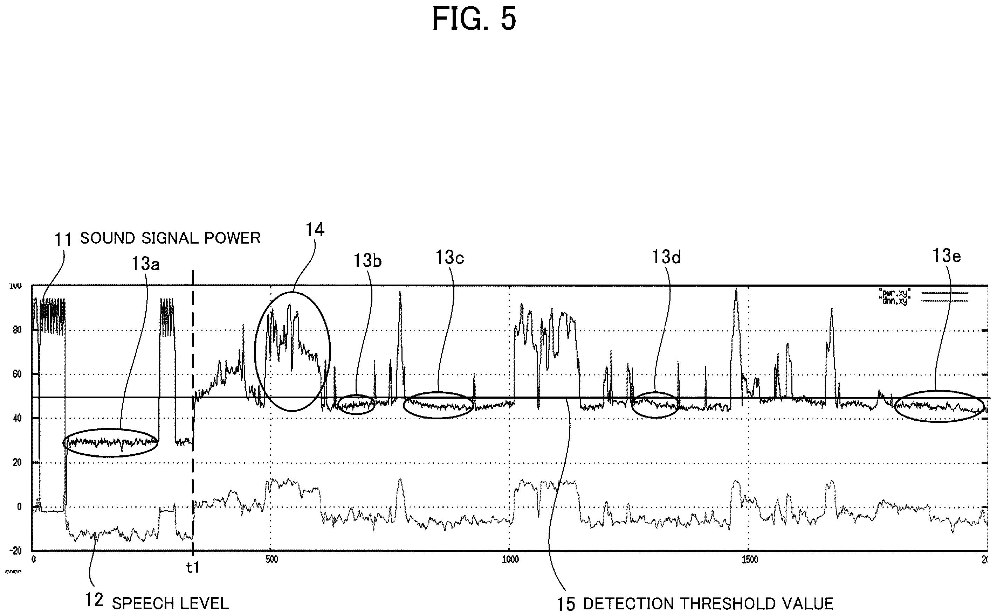

Fig. 5 shows a concrete example of a process executed by the information processing device in the first embodiment. Fig. 5 shows a graph of the sound signal power 11 calculated by the control unit 120. For example, the vertical axis of the graph of Fig. 5 represents dB. The horizontal axis of the graph of Fig. 5 represents the time. Fig. 5 indicates that the power of noise rose abruptly after time t1.

Further, the graph of Fig. 5 indicates a speech level 12. The speech level will be explained later in a second embodiment.

For example, the control unit 120 segments the sound signal power 11 into a plurality of sections. The control unit 120 calculates the variation value in regard to each section. The control unit 120 identifies sections where the variation value is less than or equal to the predetermined threshold value. For example, the control unit 120 identifies sections 13a to 13e where the variation value is less than or equal to the predetermined threshold value. Accordingly, a section 14 is excluded, for example. Incidentally, the section 14 is a speech section. Thus, the control unit 120 identifies sections other than the speech section. Namely, the control unit 120 identifies noise sections. The following description will be given on the assumption that the sections 13a to 13e have been identified.

The control unit 120 calculates the power of each of the sections 13a to 13e by using the expression (1). The control unit 120 determines power of the maximum value among the values of the power of each of the sections 13a to 13e. The control unit 120 sets a value greater than or equal to the maximum value as the detection threshold value. Fig. 5 indicates the detection threshold value 15.

The control unit 120 detects sections where the sound signal power 11 is higher than or equal to the detection threshold value 15 as the speech sections. For example, the control unit 120 detects the section 14. The output unit 130 outputs information indicating the speech sections.

According to the first embodiment, the information processing device 100 sets the detection threshold value to be higher than or equal to the power of noise even when the power of noise has risen abruptly. Thus, the information processing device 100 does not detect a noise section as the detection target section. For example, the information processing device 100 does not detect the sections 13a to 13e. Then, the information processing device 100 detects the speech section(s). Accordingly, the information processing device 100 is capable of detecting speech as the detection target with high accuracy.

Second Embodiment

Next, a second embodiment will be described below. In the second embodiment, the description will be given mainly of features different from those in the first embodiment. In the second embodiment, the description is omitted for features in common with the first embodiment. Figs. 1 and 3 are referred to in the description of the second embodiment.

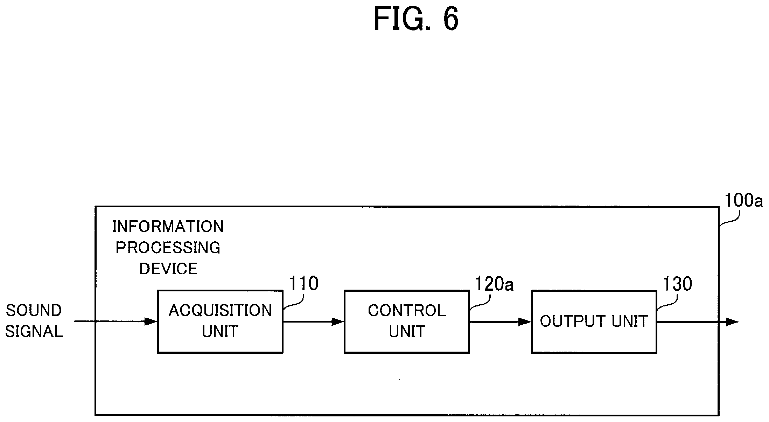

Fig. 6 is a block diagram showing function of an information processing device in the second embodiment. Each component in Fig. 6 that is the same as a component shown in Fig. 3 is assigned the same reference character as in Fig. 3.

An information processing device 100a includes a control unit 120a. The control unit 120a will be described later.

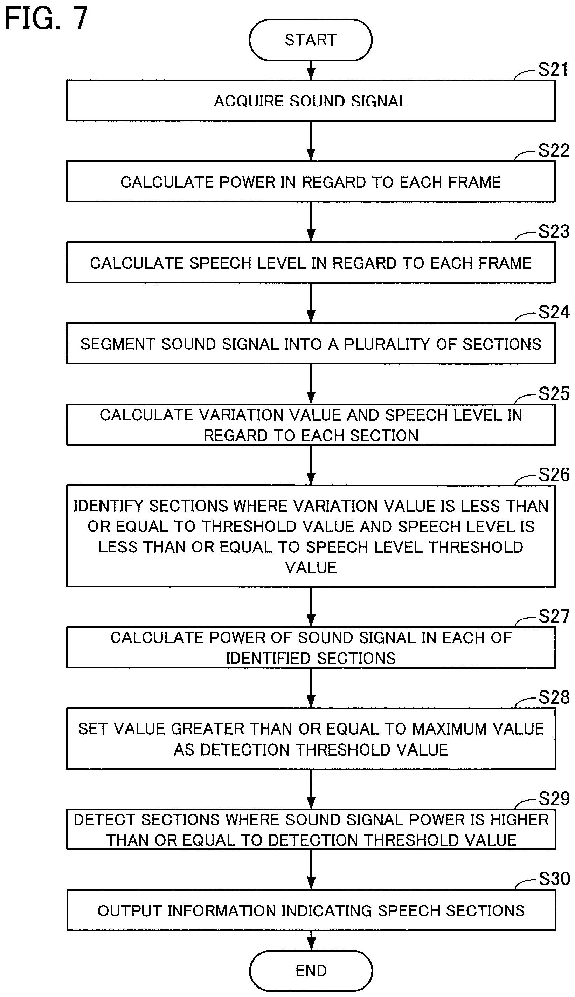

Fig. 7 is a flowchart showing an example of a process executed by the information processing device in the second embodiment.

(Step S21) The acquisition unit 110 acquires a sound signal.

(Step S22) The control unit 120a segments the sound signal in units of frames and calculates the power in regard to each frame. In other words, the control unit 120a calculates the sound signal power.

(Step S23) The control unit 120a segments the sound signal in units of frames and calculates the speech level in regard to each frame. The speech level is likelihood of being speech. For example, the control unit 120a calculates the speech level by using Gaussian Mixture Model (GMM), Deep Neural Network (DNN) or the like.

(Step S24) The control unit 120a segments the sound signal into a plurality of sections. For example, the control unit 120a may segment the sound signal power into a plurality of sections.

(Step S25) The control unit 120a calculates the variation value and the speech level in regard to each section based on the sound signal. For example, the control unit 120a calculates the variation value and the speech level of a first section among the plurality of sections. As above, the control unit 120a calculates the variation value and the speech level of the same section.

Here, the calculation of the speech level of a section will be described below. For example, the control unit 120a calculates the average value of the speech levels of a plurality of frames belonging to one section as the speech level of the section. The control unit 120a calculates the speech level in regard to each section in a similar manner.

As above, the control unit 120a calculates the speech level of each of the plurality of sections based on the sound signal. Specifically, the control unit 120a calculates the speech level of each of the plurality of sections based on a predetermined method such as GMM or DNN and the sound signal.

(Step S26) The control unit 120a identifies sections where the variation value is less than or equal to a predetermined threshold value and the speech level is less than or equal to a speech level threshold value among the plurality of sections. Incidentally, the speech level threshold value is a predetermined threshold value.

(Step S27) The control unit 120a calculates the power of the sound signal in each of the identified sections by using the expression (1).

(Step S28) The control unit 120a determines power of the maximum value among the values of the power calculated for each of the sections. The control unit 120a sets a value greater than or equal to the maximum value as the detection threshold value.

(Step S29) The control unit 120a detects sections in the sound signal where the sound signal power is higher than or equal to the detection threshold value as speech sections.

(Step S30) The output unit 130 outputs information indicating the speech sections.

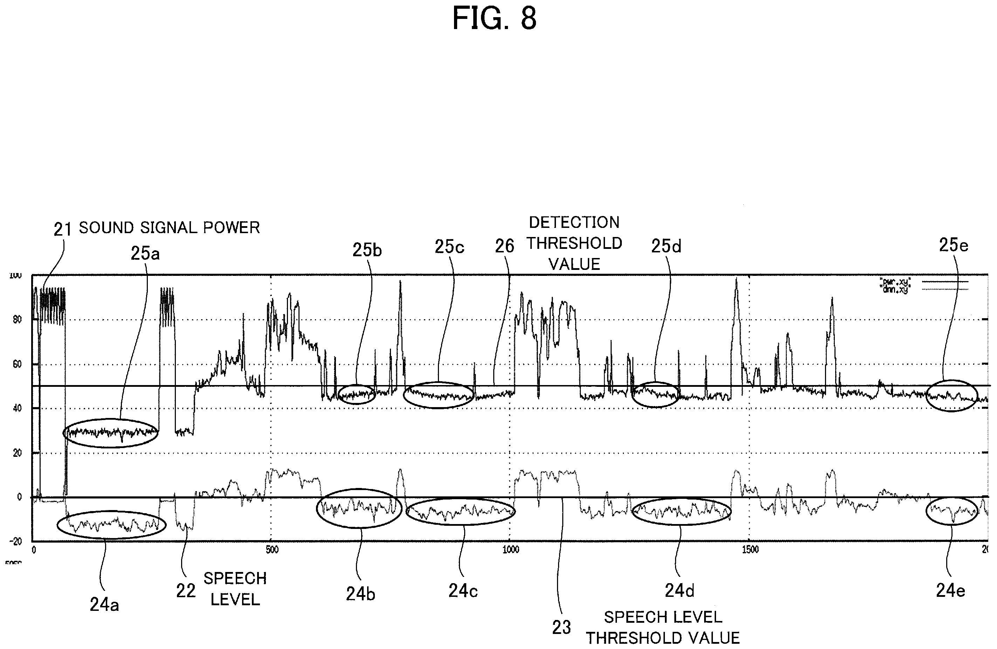

Fig. 8 shows a concrete example of a process executed by the information processing device in the second embodiment. Fig. 8 shows a graph of the sound signal power 21 calculated by the control unit 120a. Further, Fig. 8 shows a graph of the speech level 22 calculated by the control unit 120a. As mentioned above, Fig. 8 shows a mixture of the graph of the sound signal power 21 and the graph of the speech level 22. The graph of the sound signal power 21 and the graph of the speech level 22 may also be separated from each other. The horizontal axis of Fig. 8 represents the time.

Here, for example, the speech level corresponding to 0 represented by the vertical axis of Fig. 8 means that the likelihood of being speech is approximately 50%. Thus, a section of the speech level corresponding to values greater than 0 may be regarded as a speech section, for example. Further, a section of the speech level corresponding to values less than 0 may be regarded as a noise section, for example.

The control unit 120a segments the sound signal power 21 into a plurality of sections. The control unit 120a calculates the variation value in regard to each section. Further, the control unit 120a calculates the speech level in regard to each section.

The control unit 120a identifies sections where the variation value is less than or equal to the predetermined threshold value and the speech level is less than or equal to the speech level threshold value. Here, sections where the speech level is less than or equal to the speech level threshold value will be explained. Fig. 8 shows the speech level threshold value 23. For example, the sections where the speech level is less than or equal to the speech level threshold value 23 are sections 24a to 24e. For example, the sections where the variation value is less than or equal to the threshold value and the speech level is less than or equal to the speech level threshold value 23 are sections 25a to 25e. The following description will be given on the assumption that the sections 25a to 25e have been identified.

The control unit 120a calculates the power of each of the sections 25a to 25e by using the expression (1). The control unit 120a determines power of the maximum value among the values of the power of each of the sections 25a to 25e. The control unit 120a sets a value greater than or equal to the maximum value as the detection threshold value. Fig. 8 indicates the detection threshold value 26.

The control unit 120a detects sections where the sound signal power 21 is higher than or equal to the detection threshold value 26 as the speech sections. The output unit 130 outputs information indicating the speech sections.

According to the second embodiment, by use of the speech level, the information processing device 100a is capable of preventing a section where the sound signal power is constant, such as voice like "Ahhh", from being regarded mistakenly as a noise section.

Third Embodiment

Next, a third embodiment will be described below. In the third embodiment, the description will be given mainly of features different from those in the first or second embodiment. In the third embodiment, the description is omitted for features in common with the first or second embodiment. Figs. 1, 3 and 7 are referred to in the description of the third embodiment.

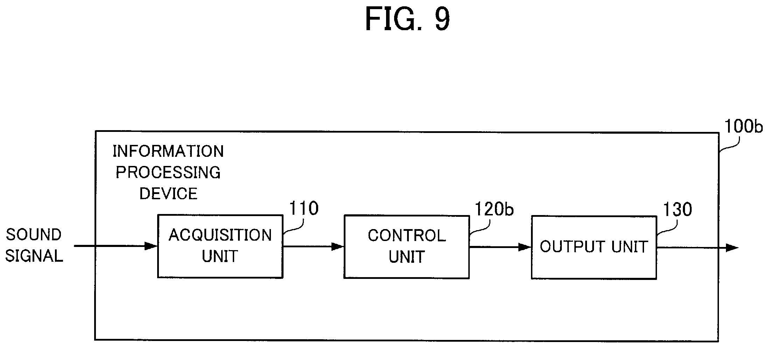

Fig. 9 is a block diagram showing function of an information processing device in the third embodiment. Each component in Fig. 9 that is the same as a component shown in Fig. 3 is assigned the same reference character as in Fig. 3.

An information processing device 100b includes a control unit 120b. The control unit 120b will be described later.

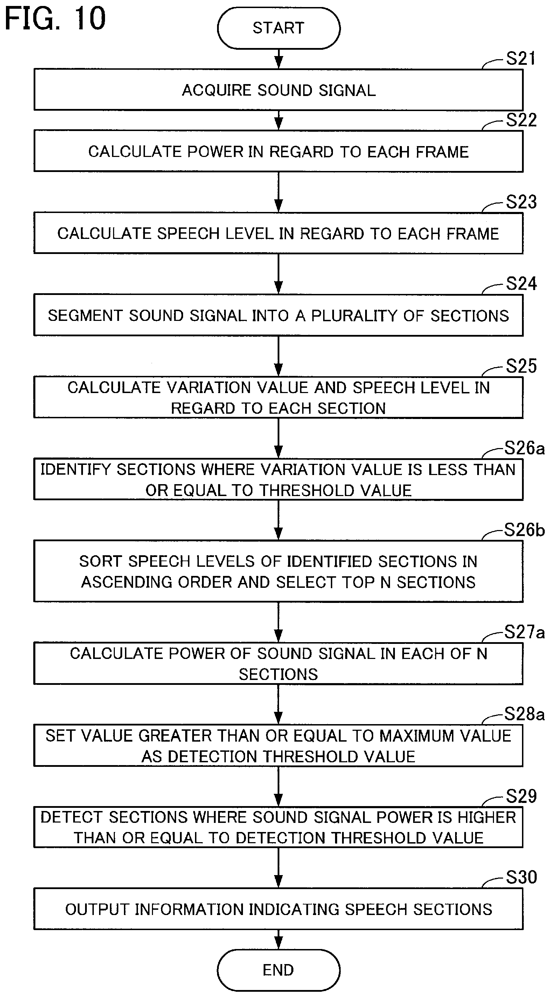

Fig. 10 is a flowchart showing an example of a process executed by the information processing device in the third embodiment.

The process of Fig. 10 differs from the process of Fig. 7 in that steps S26a, S26b, S27a and S28a are executed. Thus, the steps S26a, S26b, S27a and S28a will be explained below with reference to Fig. 10. In regard to the other steps in Fig. 10, the description of the processing is left out by assigning them the same step numbers as in Fig. 7. Incidentally, the steps S21 to S25 and the steps S29 and S30 are executed by the control unit 120b.

(Step S26a) The control unit 120b identifies sections where the variation value is less than or equal to a predetermined threshold value among the plurality of sections.

(Step S26b) The control unit 120b sorts the speech levels of the identified sections in ascending order. Incidentally, the speech levels of the identified sections have been calculated in the step S25.

The control unit 120b selects a predetermined number of sections in ascending order. The predetermined number will hereinafter be represented as N. Incidentally, N is a positive integer.

As above, the control unit 120b selects top N sections in ascending order.

(Step S27a) The control unit 120b calculates the power of the sound signal in each of the top N sections based on the sound signal. Specifically, the control unit 120b calculates the power of the sound signal in each of the top N sections by using the expression (1).

(Step S28a) The control unit 120b determines the maximum value among the values of the power of the sound signal in each of the top N sections. The control unit 120b sets a value greater than or equal to the maximum value as the detection threshold value.

Here, the speech level threshold value is set as in the second embodiment and one or more sections are detected. However, there can be cases where no section is detected depending on the value of the speech level threshold value or the speech level. In such cases, the third embodiment is effective. According to the third embodiment, N sections are selected. Then, the information processing device 100b detects the speech sections in the step S29. By this process, the information processing device 100b is capable of detecting speech as the detection target with high accuracy.

Fourth Embodiment

Next, a fourth embodiment will be described below. In the fourth embodiment, the description will be given mainly of features different from those in the first embodiment. In the fourth embodiment, the description is omitted for features in common with the first embodiment. Figs. 1 and 3 are referred to in the description of the fourth embodiment.

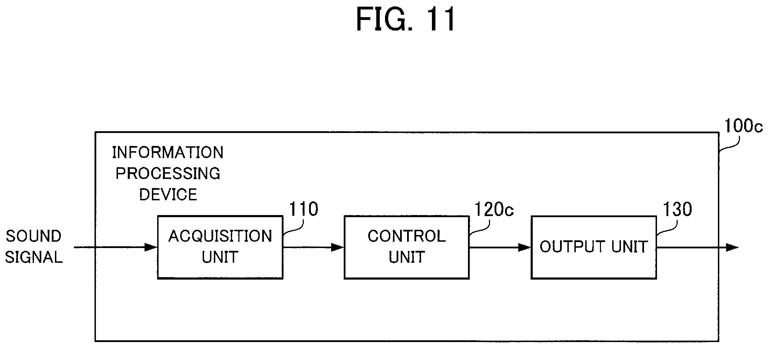

Fig. 11 is a block diagram showing function of an information processing device in the fourth embodiment. Each component in Fig. 11 that is the same as a component shown in Fig. 3 is assigned the same reference character as in Fig. 3.

An information processing device 100c includes a control unit 120c. The control unit 120c will be described later.

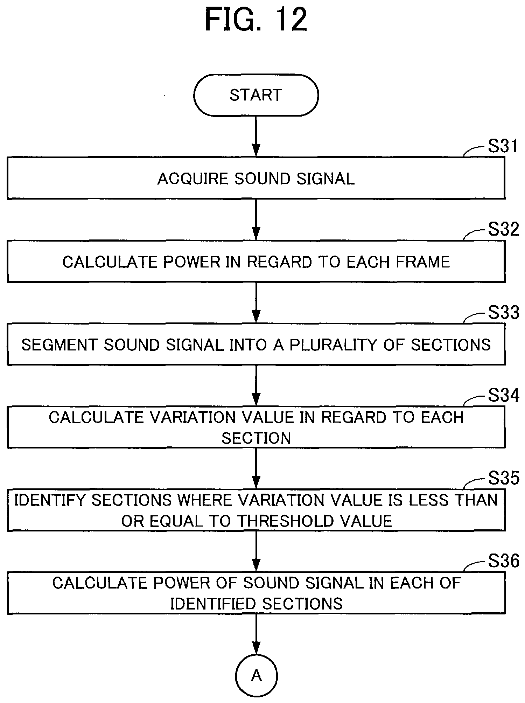

Fig. 12 is a flowchart (No. 1) showing an example of a process executed by the information processing device in the fourth embodiment.

(Step S31) The acquisition unit 110 acquires a sound signal.

(Step S32) The control unit 120c segments the sound signal in units of frames and calculates the power in regard to each frame. In other words, the control unit 120c calculates the sound signal power.

(Step S33) The control unit 120c segments the sound signal into a plurality of sections. For example, the control unit 120c may segment the sound signal power into a plurality of sections.

(Step S34) The control unit 120c calculates the variation value in regard to each section based on the sound signal.

(Step S35) The control unit 120c identifies sections where the variation value is less than or equal to a predetermined threshold value among the plurality of sections.

(Step S36) The control unit 120c calculates the power of the sound signal in each of the identified sections by using the expression (1). Then, the control unit 120c advances the process to step S41.

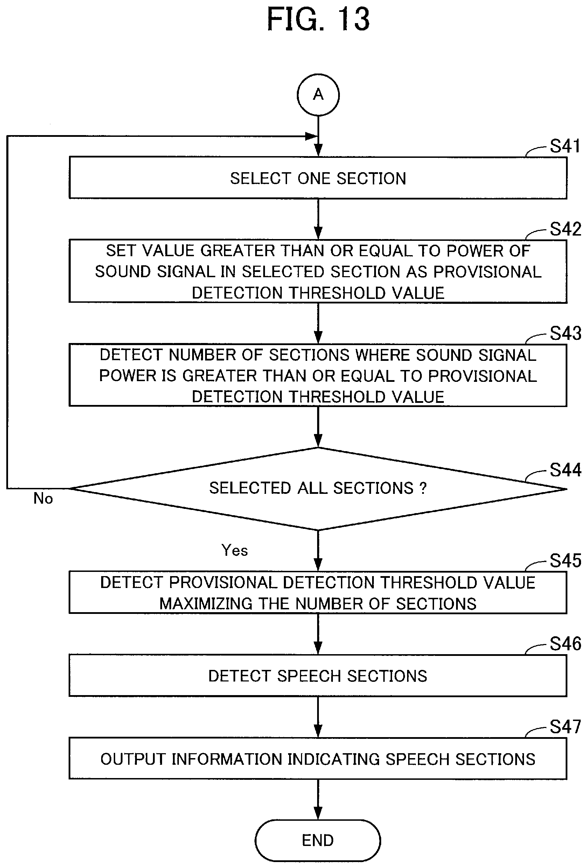

Fig. 13 is a flowchart (No. 2) showing the example of the process executed by the information processing device in the fourth embodiment.

(Step S41) The control unit 120c selects one section from the sections identified in the step S35.

(Step S42) The control unit 120c sets a value greater than or equal to the power of the sound signal in the selected section as a provisional detection threshold value. Incidentally, the power of the sound signal in the selected section has been calculated in the step S36.

(Step S43) The control unit 120c detects the number of sections where the sound signal power is greater than or equal to the provisional detection threshold value.

(Step S44) The control unit 120c judges whether or not all of the sections identified in the step S35 have been selected. If all of the sections have been selected, the control unit 120c advances the process to step S45. If there is a section not selected yet, the control unit 120c advances the process to the step S41.

As above, the control unit 120c sets a value based on the power of the sound signal in the section as the provisional detection threshold value in regard to each of the sections identified in the step S35 and detects the number of sections where the sound signal power is higher than or equal to the provisional detection threshold value.

(Step S45) The control unit 120c detects a provisional detection threshold value that maximizes the number of sections detected in the step S43, among the provisional detection threshold values set for each of the identified sections in the step S35, as the detection threshold value.

(Step S46) The control unit 120c detects the sections detected when using the provisional detection threshold value detected in the step S45 as the speech sections. In other words, the control unit 120c detects the sections detected when using the detection threshold value as the speech sections.

(Step S47) The output unit 130 outputs information indicating the speech sections.

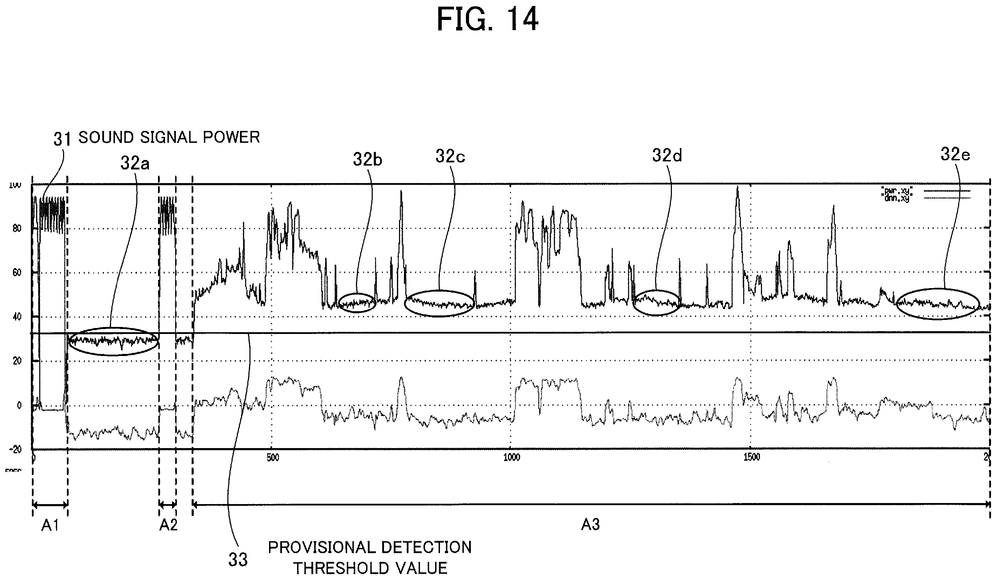

Fig. 14 shows a concrete example (No. 1) of a process executed by the information processing device in the fourth embodiment. Fig. 14 shows a graph of sound signal power 31 calculated by the control unit 120c. Fig. 14 indicates sections 32a to 32e identified by the control unit 120c in the step S35.

The control unit 120c selects the section 32a from the sections 32a to 32e. The control unit 120c sets a value greater than or equal to the power of the section 32a as the provisional detection threshold value. Fig. 14 shows the provisional detection threshold value 33 that has been set. The control unit 120c detects sections where the sound signal power 31 is higher than or equal to the provisional detection threshold value 33. For example, the control unit 120c detects sections A1 to A3. Namely, the control unit 120c detects three sections.

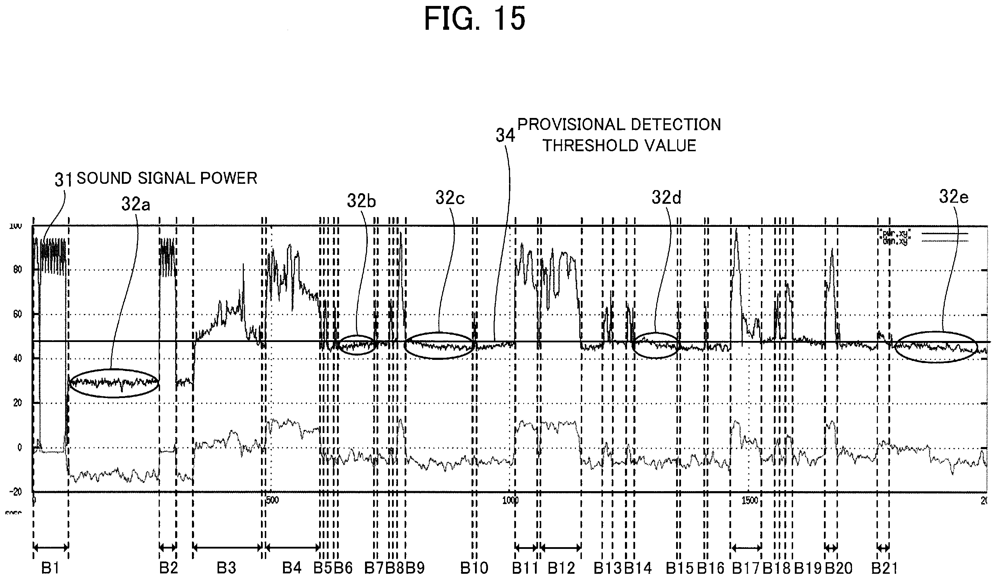

Fig. 15 shows a concrete example (No. 2) of a process executed by the information processing device in the fourth embodiment. Subsequently, the control unit 120c selects the section 32b. The control unit 120c sets a value greater than or equal to the power of the section 32b as the provisional detection threshold value. Fig. 15 shows the provisional detection threshold value 34 that has been set. The control unit 120c detects sections where the sound signal power 31 is higher than or equal to the provisional detection threshold value 34. For example, the control unit 120c detects sections B1 to B21. Namely, the control unit 120c detects twenty-one sections.

The control unit 120c executes the same process also for the sections 32c to 32e.

The control unit 120c detects a provisional detection threshold value that maximizes the number of sections detected in the step S43. The control unit 120c detects the sections detected when using the provisional detection threshold value detected in the step S45 as the speech sections.

According to the fourth embodiment, the information processing device 100c detects the speech sections by using a plurality of provisional detection threshold values. In other words, the information processing device 100c detects the speech sections by varying the provisional detection threshold value. For example, the accuracy of the detection of the speech sections can be increased by varying the provisional detection threshold value than by uniquely determining the detection threshold value as in the first embodiment.

Incidentally, the reason for using the provisional detection threshold value maximizing the number of detected sections as the final detection result is that the number of detected sections is less than the actual number of speech sections when the noise power (i.e., the power of noise) is inappropriate. Namely, when the noise power is inappropriately low, the number of detected sections becomes small since a plurality of speech sections are detected together as one section. In contrast, when the noise power is inappropriately high, speech sections at low power fail to be detected, and thus the number of detected sections becomes small also in this case.

Modification of Fourth Embodiment

Next, a modification of the fourth embodiment will be described below.

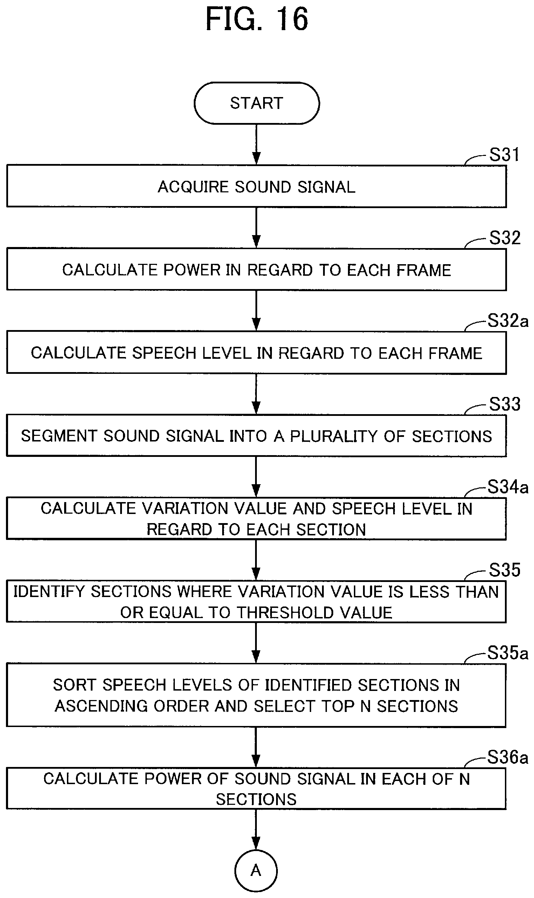

Fig. 16 is a flowchart (No. 1) showing the modification of the fourth embodiment. The process of Fig. 16 differs from the process of Fig. 12 in that steps S32a, S34a, S35a and S36a are executed. Thus, the steps S32a, S34a, S35a and S36a will be explained below with reference to Fig. 16. In regard to the other steps in Fig. 16, the description of the processing is left out by assigning them the same step numbers as in Fig. 12.

(Step S32a) The control unit 120c segments the sound signal in units of frames and calculates the speech level in regard to each frame.

(Step S34a) The control unit 120c calculates the variation value and the speech level in regard to each section based on the sound signal.

(Step S35a) The control unit 120c sorts the speech levels of the identified sections in ascending order. The control unit 120c selects top N sections in ascending order.

(Step S36a) The control unit 120c calculates the power of the sound signal in each of the top N sections based on the sound signal. Specifically, the control unit 120c calculates the power of the sound signal in each of the top N sections by using the expression (1). Then, the control unit 120c advances the process to step S41a.

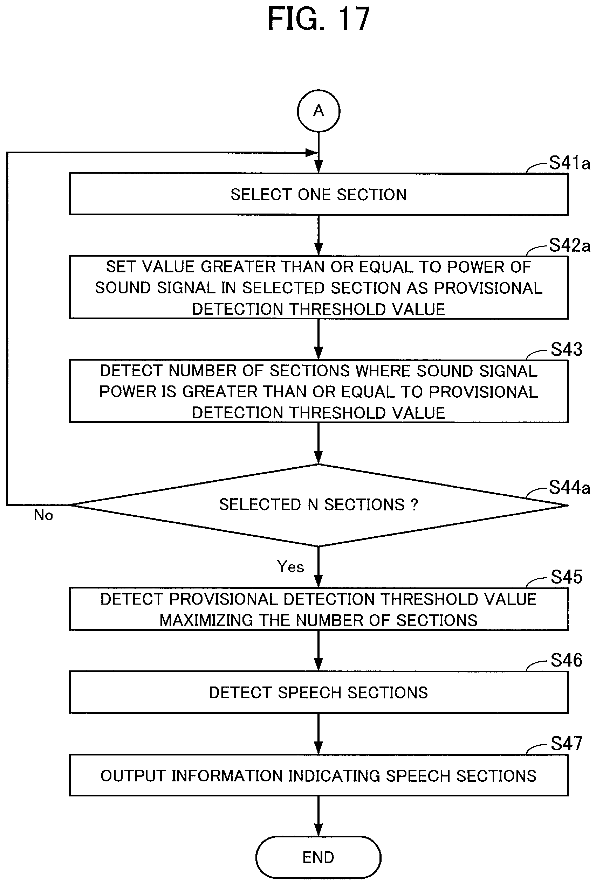

Fig. 17 is a flowchart (No. 2) showing the modification of the fourth embodiment. The process of Fig. 17 differs from the process of Fig. 13 in that steps S41a, S42a and S44a are executed. Thus, the steps S41a, S42a and S44a will be explained below with reference to Fig. 17. In regard to the other steps in Fig. 17, the description of the processing therein is left out by assigning them the same step numbers as in Fig. 13.

(Step S41a) The control unit 120c selects one section from the top N sections.

(Step S42a) The control unit 120c sets a value greater than or equal to the power of the sound signal in the selected section as the provisional detection threshold value. Incidentally, the power of the sound signal in the selected section has been calculated in the step S36a.

(Step S44a) The control unit 120c judges whether or not the top N sections have been selected. If the top N sections have been selected, the control unit 120c advances the process to the step S45. If there is a section not selected yet, the control unit 120c advances the process to the step S41a.

As above, in regard to each of the top N sections, the control unit 120c sets a value based on the power of the sound signal in the section as the provisional detection threshold value and detects the number of sections where the sound signal power is greater than or equal to the provisional detection threshold value.

According to the modification of the fourth embodiment, the information processing device 100c is capable of increasing the accuracy of the detection of the speech sections.

Fifth Embodiment

Next, a fifth embodiment will be described below. In the fifth embodiment, the description will be given mainly of features different from those in the first embodiment. In the fifth embodiment, the description is omitted for features in common with the first embodiment. Figs. 1 and 3 are referred to in the description of the fifth embodiment.

In the first to fourth embodiments, the description was given of cases of detecting speech sections as the detection target sections. In the fifth embodiment, a description will be given of cases of detecting non-stationary noise sections as the detection target sections.

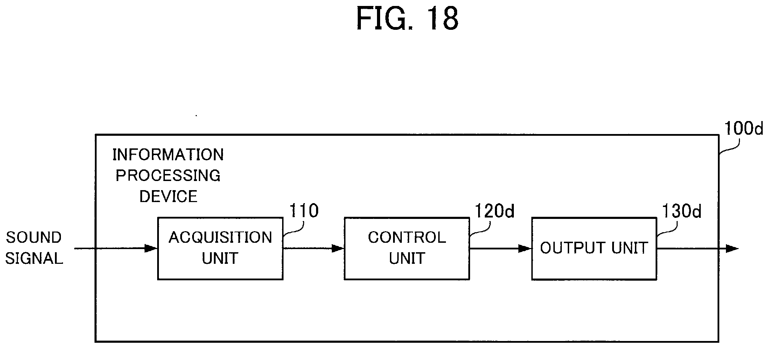

Fig. 18 is a block diagram showing function of an information processing device in the fifth embodiment. Each component in Fig. 18 that is the same as a component shown in Fig. 3 is assigned the same reference character as in Fig. 3.

An information processing device 100d includes a control unit 120d and an output unit 130d. The control unit 120d and the output unit 130d will be described later.

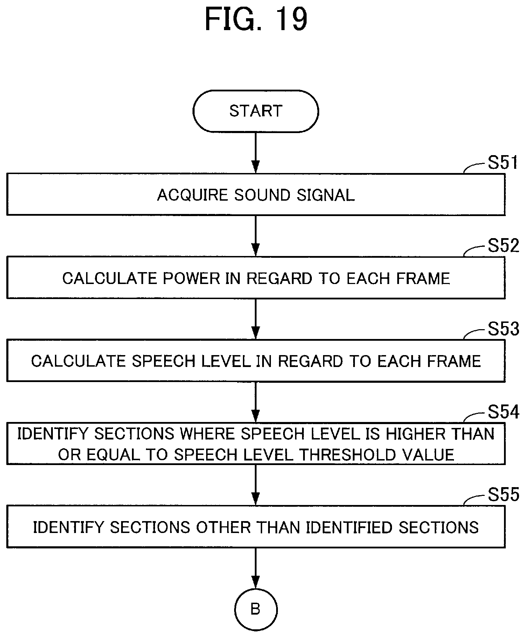

Fig. 19 is a flowchart (No. 1) showing an example of a process executed by the information processing device in the fifth embodiment.

(Step S51) The acquisition unit 110 acquires a sound signal.

(Step S52) The control unit 120d segments the sound signal in units of frames and calculates the power in regard to each frame. In other words, the control unit 120d calculates the sound signal power.

(Step S53) The control unit 120d segments the sound signal in units of frames and calculates the speech level in regard to each frame. In other words, the control unit 120d calculates the speech level with the elapse of time based on a predetermined method such as GMM or DNN and the sound signal. Here, the speech level with the elapse of time may be represented as the speech level in a time line.

(Step S54) The control unit 120d identifies sections where the speech level is higher than or equal to a speech level threshold value. By this step, the control unit 120d identifies speech sections. Incidentally, when no speech section is identified, the control unit 120d may lower the speech level threshold value.

(Step S55) The control unit 120d identifies sections other than the identified sections. By this step, the control unit 120d identifies non-stationary noise section candidates.

Alternatively, the control unit 120d may execute the following process instead of the step S54 and the step S55: The control unit 120d identifies sections where the speech level is less than the speech level threshold value. By this process, the control unit 120d identifies the non-stationary noise section candidates. Then, the control unit 120d advances the process to step S61.

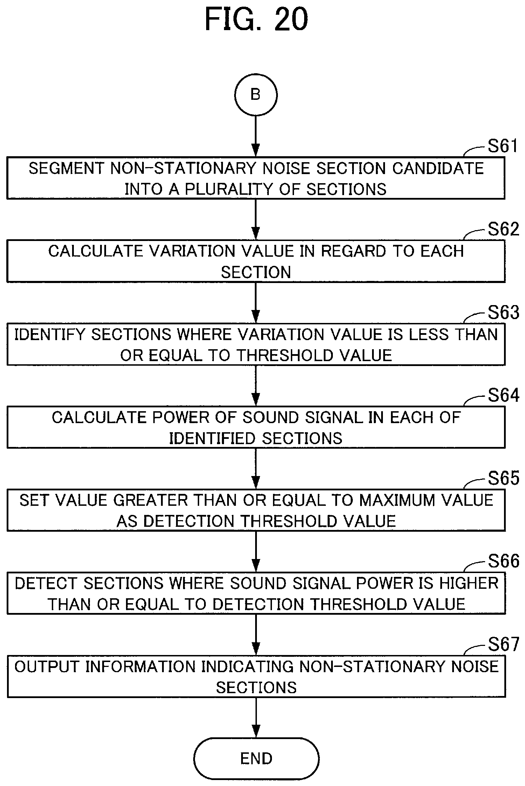

Fig. 20 is a flowchart (No. 2) showing the example of the process executed by the information processing device in the fifth embodiment. The following description will be given assuming that one non-stationary noise section candidate has been identified. When a plurality of non-stationary noise section candidates have been identified, the process of Fig. 20 is repeated for the number of non-stationary noise section candidates

(Step S61) The control unit 120d segments one non-stationary noise section candidate into a plurality of sections. Incidentally, the control unit 120d may either evenly segment the non-stationary noise section candidate or unevenly segment the non-stationary noise section candidate.

(Step S62) The control unit 120d calculates the variation value of each of the plurality of sections based on the sound signal.

(Step S63) The control unit 120d identifies sections where the variation value is less than or equal to a predetermined threshold value among the plurality of sections.

(Step S64) The control unit 120d calculates the power of the sound signal in each of the identified sections based on the sound signal. Specifically, the control unit 120d calculates the power of the sound signal in each of the identified sections by using the expression (1).

(Step S65) The control unit 120d determines the maximum value among the values of the sound signal power in each of the identified sections. The control unit 120d sets a value greater than or equal to the maximum value as the detection threshold value.

(Step S66) The control unit 120d detects sections that are in the non-stationary noise section candidate and whose sound signal power is higher than or equal to the detection threshold value as non-stationary noise sections.

(Step S67) The output unit 130d outputs information indicating the non-stationary noise section as the detection target section. For example, the output unit 130d outputs a start time and an end time of each non-stationary noise section.

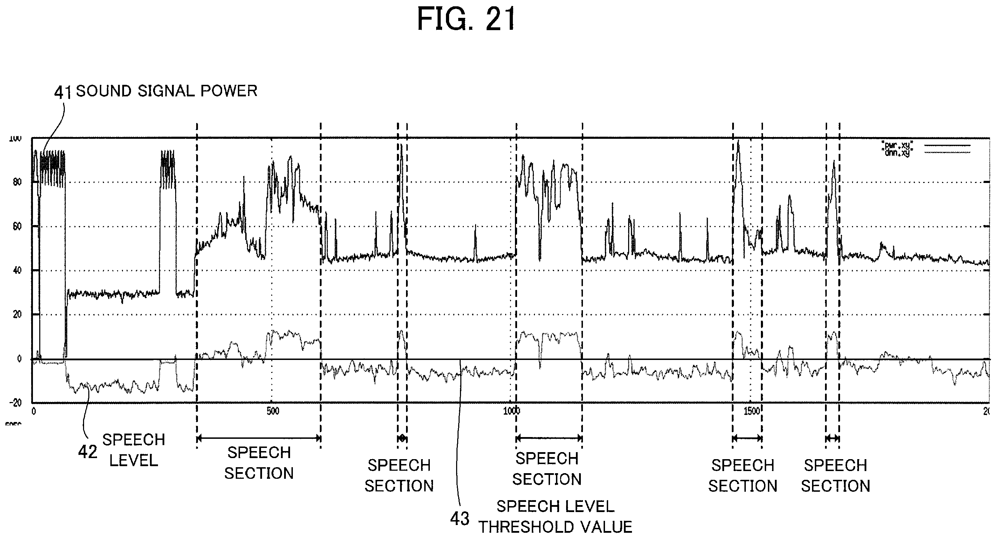

Fig. 21 shows a concrete example (No. 1) of a process executed by the information processing device in the fifth embodiment. Fig. 21 shows a graph of sound signal power 41 calculated by the control unit 120d. Further, Fig. 21 shows a graph of a speech level 42. Furthermore, Fig. 21 indicates a speech level threshold value 43.

The control unit 120d identifies sections where the speech level is higher than or equal to the speech level threshold value 43. Fig. 21 indicates speech sections as the identified sections.

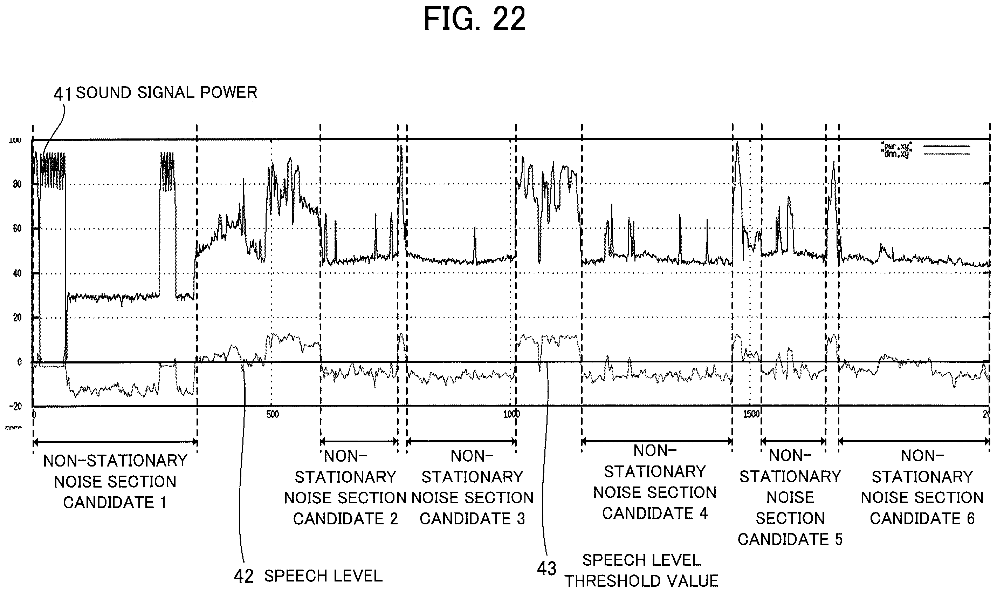

Fig. 22 shows a concrete example (No. 2) of a process executed by the information processing device in the fifth embodiment. The control unit 120d identifies sections other than the identified sections. Fig. 22 indicates non-stationary noise section candidates as the sections identified.

For example, the control unit 120d segments the non-stationary noise section candidate 1 into a plurality of sections. The control unit 120d calculates the variation value in regard to each section. The control unit 120d identifies sections where the variation value is less than or equal to the predetermined threshold value. The control unit 120d calculates the power of the sound signal in each of the identified sections. The control unit 120d determines power of the maximum value among the values of the power calculated for each of the sections. The control unit 120d sets a value greater than or equal to the maximum value as the detection threshold value. The control unit 120d detects sections that are in the non-stationary noise section candidate 1 and whose sound signal power 41 is higher than or equal to the detection threshold value as non-stationary noise sections.

The information processing device 100d is capable of detecting non-stationary noise sections in each of the non-stationary noise section candidates 2 to 6 in the same way.

According to the fifth embodiment, the information processing device 100d is capable of stably detecting speech by using the speech level. Further, for the detection of non-stationary noise, the information processing device 100d sets the detection threshold value for each of the non-stationary noise section candidates by targeting sections other than speech, and thus the non-stationary noise can be detected with high accuracy.

Features in the embodiments described above can be appropriately combined with each other.

**DESCRIPTION OF REFERENCE CHARACTERS**

11: sound signal power, 12: speech level, 13a - 13e: section, 14: section, 15: detection threshold value, 21: sound signal power, 22: speech level, 23: speech level threshold value, 24a - 24e: section, 25a - 25e: section, 26: detection threshold value, 31: sound signal power, 32a - 32e: section, 33: provisional detection threshold value, 34: provisional detection threshold value, 41: sound signal power, 42: speech level, 43: speech level threshold value, 100, 100a, 100b, 100c, 100d: information processing device, 101: processor, 102: volatile storage device, 103: nonvolatile storage device, 110: acquisition unit, 120, 120a, 120b, 120c, 120d: control unit, 130, 130d: output unit, 900: range, 901: threshold value, 902: range

**Claims**

1.  An information processing device (100d) comprising:

an acquisition unit (110) that acquires a sound signal; and
a control unit (120d) that calculates a speech level with elapse of time as likelihood of being speech based on the sound signal,
identifies sections where the speech level with elapse of time is less than a predetermined threshold value as non-stationary noise section candidates,
segments each non-stationary noise section candidate into a plurality of sections,
calculates a variation value of each of the plurality of sections obtained by the segmentation based on the sound signal, the variation value being a variation amount per section time,
identifies sections where the variation value is less than or equal to a predetermined threshold value among the plurality of sections obtained by the segmentation,
calculates the power of the sound signal in each of the identified sections based on the sound signal,
determines a maximum value among values of the power of the sound signal in each of the identified sections,
sets a value based on the determined maximum value as a detection threshold value, and
detects sections that are in the non-stationary noise section candidate and whose power of the sound signal with elapse of time is higher than or equal to the detection threshold value as non-stationary noise sections.

2.  The information processing device according to claim 1, further comprising an output unit (130, 130d) that outputs information indicating the detected sections.

**Patentansprüche**

1.  Informationsverarbeitungseinrichtung (100d), umfassend:

eine Beschaffungseinheit (110), die ein Tonsignal beschafft; und
eine Steuereinheit (120d), die auf der Grundlage des Tonsignals einen Sprachpegel im Zeitverlauf als Wahrscheinlichkeit, dass es sich um Sprache handelt, berechnet,
Abschnitte, in denen der Sprachpegel im Zeitverlauf unter einem vorbestimmten Schwellenwert liegt, als nichtstationäre Störgeräuschabschnittskandidaten identifiziert,
jeden nichtstationären Störgeräuschabschnittskandidaten in eine Vielzahl von Abschnitten segmentiert,
einen Variationswert für jeden der Vielzahl von Abschnitten, die durch die Segmentierung erhalten werden, auf Grundlage des Tonsignals berechnet, wobei der Variationswert ein Variationsbetrag pro Abschnittszeit ist,

Abschnitte unter der Vielzahl von durch die Segmentierung erhaltenen Abschnitten identifiziert, bei denen der Variationswert kleiner oder gleich einem vorbestimmten Schwellenwert ist, die Tonsignalleistung in jedem der identifizierten Abschnitte auf der Grundlage des Tonsignals berechnet,

einen Maximalwert aus den Werten der Tonsignalleistung in jedem der identifizierten Abschnitte bestimmt,

einen auf dem bestimmten Maximalwert basierenden Wert als Erfassungsschwellenwert einstellt, und

Abschnitte, die sich in dem nichtstationären Störgeräuschabschnittskandidaten befinden und deren Tonsignalleistung in dem Zeitverlauf größer oder gleich dem Erfassungsschwellenwert ist, als nichtstationäre Störgeräuschabschnitte erfasst.

**2.** Informationsverarbeitungseinrichtung nach Anspruch 1, ferner umfassend eine Ausgabeeinheit (130, 130d), die Informationen ausgibt, welche die erfassten Abschnitte angeben.

**Revendications**

**1.** Dispositif de traitement d'informations (100d), comprenant :

une unité d'acquisition (110) qui acquiert un signal sonore ; et

une unité de commande (120d) qui calcule un niveau de parole avec écoulement de temps en tant que probabilité d'être de la parole sur la base du signal sonore,

identifie des sections où le niveau de parole avec écoulement de temps est inférieur à une valeur de seuil prédéterminée en tant que candidates de section de bruit non stationnaire,

segmente chaque candidate de section de bruit non stationnaire en une pluralité de sections,

calcule une valeur de variation de chacune de la pluralité de sections obtenue par la segmentation sur la base du signal sonore, la valeur de variation étant une quantité de variation par temps de section,

identifie des sections où la valeur de variation est inférieure ou égale à une valeur de seuil prédéterminée parmi la pluralité de sections obtenues par la segmentation,

calcule la puissance du signal sonore dans chacune des sections identifiées sur la base du signal sonore,

détermine une valeur maximale parmi des valeurs de la puissance du signal sonore dans chacune des sections identifiées,

définit une valeur basée sur la valeur maximale déterminée en tant que valeur de seuil de détection, et

détecte des sections qui sont dans la candidate de section de bruit non stationnaire et dont la puissance du signal sonore avec écoulement de temps est supérieure ou égale à la valeur de seuil de détection en tant que sections de bruit non stationnaire.

**2.** Dispositif de traitement d'informations selon la revendication 1, comprenant en outre une unité de sortie (130, 130d) qui délivre en sortie des informations indiquant les sections détectées.

# FIG. 1

# FIG. 2

DETECTION TARGET SECTION

EP 4 060 662 B1

# FIG. 3

# FIG. 4

START

S11
ACQUIRE SOUND SIGNAL

S12
CALCULATE POWER IN REGARD TO EACH FRAME

S13
SEGMENT SOUND SIGNAL INTO A PLURALITY OF SECTIONS

S14
CALCULATE VARIATION VALUE IN REGARD TO EACH SECTION

S15
IDENTIFY SECTIONS WHERE VARIATION VALUE IS LESS THAN OR EQUAL TO THRESHOLD VALUE

S16
CALCULATE POWER OF SOUND SIGNAL IN EACH OF IDENTIFIED SECTIONS

S17
SET VALUE GREATER THAN OR EQUAL TO MAXIMUM VALUE AS DETECTION THRESHOLD VALUE

S18
DETECT SECTIONS WHERE SOUND SIGNAL POWER IS HIGHER THAN OR EQUAL TO DETECTION THRESHOLD VALUE

S19
OUTPUT INFORMATION INDICATING SPEECH SECTIONS

END

# FIG. 5

11 SOUND SIGNAL POWER
14
13a
13b
13c
13d
13e
12 SPEECH LEVEL
15 DETECTION THRESHOLD VALUE

EP 4 060 662 B1

# FIG. 6

INFORMATION
PROCESSING
DEVICE 100a

SOUND
SIGNAL → ACQUISITION UNIT 110 → CONTROL UNIT 120a → OUTPUT UNIT 130 →

# FIG. 7

START

S21
ACQUIRE SOUND SIGNAL

S22
CALCULATE POWER IN REGARD TO EACH FRAME

S23
CALCULATE SPEECH LEVEL IN REGARD TO EACH FRAME

S24
SEGMENT SOUND SIGNAL INTO A PLURALITY OF SECTIONS

S25
CALCULATE VARIATION VALUE AND SPEECH LEVEL IN REGARD TO EACH SECTION

S26
IDENTIFY SECTIONS WHERE VARIATION VALUE IS LESS THAN OR EQUAL TO THRESHOLD VALUE AND SPEECH LEVEL IS LESS THAN OR EQUAL TO SPEECH LEVEL THRESHOLD VALUE

S27
CALCULATE POWER OF SOUND SIGNAL IN EACH OF IDENTIFIED SECTIONS

S28
SET VALUE GREATER THAN OR EQUAL TO MAXIMUM VALUE AS DETECTION THRESHOLD VALUE

S29
DETECT SECTIONS WHERE SOUND SIGNAL POWER IS HIGHER THAN OR EQUAL TO DETECTION THRESHOLD VALUE

S30
OUTPUT INFORMATION INDICATING SPEECH SECTIONS

END

# FIG. 8

21 SOUND SIGNAL POWER

25a 25b 25c 26 DETECTION THRESHOLD VALUE 25d 25e

24a 22 SPEECH LEVEL 24b 24c 24d 24e

23 SPEECH LEVEL THRESHOLD VALUE

# FIG. 9

EP 4 060 662 B1

# FIG. 10

START

S21

ACQUIRE SOUND SIGNAL

S22

CALCULATE POWER IN REGARD TO EACH FRAME

S23

CALCULATE SPEECH LEVEL IN REGARD TO EACH FRAME

S24

SEGMENT SOUND SIGNAL INTO A PLURALITY OF SECTIONS

S25

CALCULATE VARIATION VALUE AND SPEECH LEVEL IN REGARD TO EACH SECTION

S26a

IDENTIFY SECTIONS WHERE VARIATION VALUE IS LESS THAN OR EQUAL TO THRESHOLD VALUE

S26b

SORT SPEECH LEVELS OF IDENTIFIED SECTIONS IN ASCENDING ORDER AND SELECT TOP N SECTIONS

S27a

CALCULATE POWER OF SOUND SIGNAL IN EACH OF N SECTIONS

S28a

SET VALUE GREATER THAN OR EQUAL TO MAXIMUM VALUE AS DETECTION THRESHOLD VALUE

S29

DETECT SECTIONS WHERE SOUND SIGNAL POWER IS HIGHER THAN OR EQUAL TO DETECTION THRESHOLD VALUE

S30

OUTPUT INFORMATION INDICATING SPEECH SECTIONS

END

FIG. 11

100c

INFORMATION
PROCESSING
DEVICE

SOUND SIGNAL →

110
ACQUISITION UNIT

120c
CONTROL UNIT

130
OUTPUT UNIT →

# FIG. 12

START

S31
ACQUIRE SOUND SIGNAL

S32
CALCULATE POWER IN REGARD TO EACH FRAME

S33
SEGMENT SOUND SIGNAL INTO A PLURALITY OF SECTIONS

S34
CALCULATE VARIATION VALUE IN REGARD TO EACH SECTION

S35
IDENTIFY SECTIONS WHERE VARIATION VALUE IS LESS THAN OR EQUAL TO THRESHOLD VALUE

S36
CALCULATE POWER OF SOUND SIGNAL IN EACH OF IDENTIFIED SECTIONS

A

# FIG. 13

A

S41
SELECT ONE SECTION

S42
SET VALUE GREATER THAN OR EQUAL TO POWER OF SOUND SIGNAL IN SELECTED SECTION AS PROVISIONAL DETECTION THRESHOLD VALUE

S43
DETECT NUMBER OF SECTIONS WHERE SOUND SIGNAL POWER IS GREATER THAN OR EQUAL TO PROVISIONAL DETECTION THRESHOLD VALUE

S44
SELECTED ALL SECTIONS ?

No

Yes

S45
DETECT PROVISIONAL DETECTION THRESHOLD VALUE MAXIMIZING THE NUMBER OF SECTIONS

S46
DETECT SPEECH SECTIONS

S47
OUTPUT INFORMATION INDICATING SPEECH SECTIONS

END

# FIG. 14

31 SOUND SIGNAL POWER

32a  32b  32c  32d  32e

A1  A2  A3

33  PROVISIONAL DETECTION
THRESHOLD VALUE

EP 4 060 662 B1

FIG. 15

# FIG. 16

```
          ┌─────────────┐
          │    START    │
          └──────┬──────┘
                 │                              ╭─S31
    ┌────────────▼──────────────────────────────┐
    │          ACQUIRE SOUND SIGNAL              │
    └────────────┬──────────────────────────────┘
                 │                              ╭─S32
    ┌────────────▼──────────────────────────────┐
    │    CALCULATE POWER IN REGARD TO EACH FRAME │
    └────────────┬──────────────────────────────┘
                 │                              ╭─S32a
    ┌────────────▼──────────────────────────────┐
    │ CALCULATE SPEECH LEVEL IN REGARD TO EACH FRAME │
    └────────────┬──────────────────────────────┘
                 │                              ╭─S33
    ┌────────────▼──────────────────────────────┐
    │ SEGMENT SOUND SIGNAL INTO A PLURALITY OF SECTIONS │
    └────────────┬──────────────────────────────┘
                 │                              ╭─S34a
    ┌────────────▼──────────────────────────────┐
    │ CALCULATE VARIATION VALUE AND SPEECH LEVEL IN │
    │          REGARD TO EACH SECTION            │
    └────────────┬──────────────────────────────┘
                 │                              ╭─S35
    ┌────────────▼──────────────────────────────┐
    │ IDENTIFY SECTIONS WHERE VARIATION VALUE IS LESS THAN │
    │        OR EQUAL TO THRESHOLD VALUE         │
    └────────────┬──────────────────────────────┘
                 │                              ╭─S35a
    ┌────────────▼──────────────────────────────┐
    │  SORT SPEECH LEVELS OF IDENTIFIED SECTIONS IN │
    │   ASCENDING ORDER AND SELECT TOP N SECTIONS │
    └────────────┬──────────────────────────────┘
                 │                              ╭─S36a
    ┌────────────▼──────────────────────────────┐
    │ CALCULATE POWER OF SOUND SIGNAL IN EACH OF N │
    │                 SECTIONS                   │
    └────────────┬──────────────────────────────┘
                 │
              ┌──▼──┐
              │  A  │
              └─────┘
```

# FIG. 17

A

S41a

SELECT ONE SECTION

S42a

SET VALUE GREATER THAN OR EQUAL TO POWER OF
SOUND SIGNAL IN SELECTED SECTION AS PROVISIONAL
DETECTION THRESHOLD VALUE

S43

DETECT NUMBER OF SECTIONS WHERE SOUND SIGNAL
POWER IS GREATER THAN OR EQUAL TO PROVISIONAL
DETECTION THRESHOLD VALUE

S44a

SELECTED N SECTIONS ?

No

Yes

S45

DETECT PROVISIONAL DETECTION THRESHOLD VALUE
MAXIMIZING THE NUMBER OF SECTIONS

S46

DETECT SPEECH SECTIONS

S47

OUTPUT INFORMATION INDICATING SPEECH SECTIONS

END

## FIG. 18

# FIG. 19

START

S51

ACQUIRE SOUND SIGNAL

S52

CALCULATE POWER IN REGARD TO EACH FRAME

S53

CALCULATE SPEECH LEVEL IN REGARD TO EACH FRAME

S54

IDENTIFY SECTIONS WHERE SPEECH LEVEL IS HIGHER THAN OR EQUAL TO SPEECH LEVEL THRESHOLD VALUE

S55

IDENTIFY SECTIONS OTHER THAN IDENTIFIED SECTIONS

B

# FIG. 20

B

S61
SEGMENT NON-STATIONARY NOISE SECTION CANDIDATE INTO A PLURALITY OF SECTIONS

S62
CALCULATE VARIATION VALUE IN REGARD TO EACH SECTION

S63
IDENTIFY SECTIONS WHERE VARIATION VALUE IS LESS THAN OR EQUAL TO THRESHOLD VALUE

S64
CALCULATE POWER OF SOUND SIGNAL IN EACH OF IDENTIFIED SECTIONS

S65
SET VALUE GREATER THAN OR EQUAL TO MAXIMUM VALUE AS DETECTION THRESHOLD VALUE

S66
DETECT SECTIONS WHERE SOUND SIGNAL POWER IS HIGHER THAN OR EQUAL TO DETECTION THRESHOLD VALUE

S67
OUTPUT INFORMATION INDICATING NON-STATIONARY NOISE SECTIONS

END

# FIG. 21

41 SOUND SIGNAL POWER

42 SPEECH LEVEL

SPEECH SECTION

SPEECH SECTION

43 SPEECH LEVEL THRESHOLD VALUE

SPEECH SECTION

SPEECH SECTION

SPEECH SECTION

FIG. 22

41 SOUND SIGNAL POWER

NON-STATIONARY NOISE SECTION CANDIDATE 1

NON-STATIONARY NOISE SECTION CANDIDATE 2

NON-STATIONARY NOISE SECTION CANDIDATE 3

NON-STATIONARY NOISE SECTION CANDIDATE 4

NON-STATIONARY NOISE SECTION CANDIDATE 5

NON-STATIONARY NOISE SECTION CANDIDATE 6

42 SPEECH LEVEL

43 SPEECH LEVEL THRESHOLD VALUE

EP 4 060 662 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10288994 A
- US 6175634 B1
- US 2013003987 A1